# EUROPEAN PATENT APPLICATION

(11) **EP 4 796 354 A1**
(43) Date of publication of application: **26.08.2026**
(21) Application number: 24884362.5
(22) Date of filing: 30.09.2024
(51) Int. Cl.: B60K 1/00

(54) **DRIVING APPARATUS AND VEHICLE**

(30) Priority: 31.10.2023 CN 202322946625 U
(71) Applicant: BYD Company Limited, Shenzhen, Guangdong 518118 (CN)
(72) Inventor: ZENG, Dong, Shenzhen, Guangdong 518118 (CN); DING, Huan, Shenzhen, Guangdong 518118 (CN); ZHANG, Lianfeng, Shenzhen, Guangdong 518118 (CN); WANG, Puxi, Shenzhen, Guangdong 518118 (CN); LI, Jiacheng, Shenzhen, Guangdong 518118 (CN)
(74) Representative: Taor, Simon Edward William
(86) International application number: PCT/CN2024/122972
(87) International publication number: WO 2025/092357

(57) **Abstract**

A driving apparatus and a vehicle provided with same. The driving apparatus includes a driver, a gearbox, and a speed reducer. The gearbox and the driver are spaced apart in the width direction of the vehicle. At least a part of the speed reducer is located between the driver and the gearbox. At least one of the driver and the gearbox is higher than the bottom of the speed reducer in the height direction of the vehicle.

## Description

### CROSS-REFERENCE TO RELATED APPLICATIONS

The present disclosure claims priority to Chinese Patent Application No. 202322946625.4 filed on October 31, 2023, entitled "DRIVING APPARATUS AND VEHICLE", which is incorporated herein by reference in its entirety.

### FIELD

The present disclosure relates to the field of vehicle technologies, and in particular, to a driving apparatus and a vehicle provided with the driving apparatus.

### BACKGROUND

A driving structure of a vehicle usually includes a drive motor and a speed reducer. The drive motor, as the power source of the vehicle, can provide power for the vehicle. Since the rotational speed of the drive motor is relatively high, a speed reducer needs to be provided for speed reduction and torque increase. A gearbox may also be arranged between the drive motor and the speed reducer, and by changing the transmission ratio of the gearbox, the torque can be adjusted to meet the requirements of different working conditions. In the prior art, the drive motor, the speed reducer and the gearbox are usually located on the same horizontal plane. When arranging other structures such as an exhaust pipe, it is necessary to avoid the above-mentioned driving structure, resulting in a large width of the vehicle, which is not conducive to the layout of vehicles with a narrow track width. In addition, the ground clearance of the vehicle will be reduced, and the passability of the vehicle will be impaired.

### SUMMARY

The present disclosure provides a new technical solution of a driving apparatus, which can at least resolve one of technical problems in the prior art that the driving apparatus is difficult to be applied to vehicles with a narrow track width and the vehicle has a small ground clearance.

The present disclosure also provides a vehicle provided with the above-mentioned driving apparatus.

According to a first aspect of the present disclosure, a driving apparatus is provided, including: a driver, a gearbox, and a speed reducer. The gearbox and the driver are spaced apart in a width direction of the vehicle. At least a portion of the speed reducer is located between the driver and the gearbox. Wherein, at least one of the driver and the gearbox is higher than the bottom of the speed reducer in a height direction of the vehicle.

In an embodiment, in the height direction of the vehicle, the bottom of the driver and the bottom of the gearbox are respectively higher than the bottom of the speed reducer.

In an embodiment, in the width direction of the vehicle, the speed reducer is staggered from the driver and the gearbox respectively.

In an embodiment, the driving apparatus further includes a differential, the differential is connected to an output end of the speed reducer, and at least a portion of the differential is disposed on a side of the speed reducer facing the driver. In the height direction of the vehicle, the bottom of the differential is higher than the bottom of the speed reducer.

In an embodiment, the differential is configured to overlap with the speed reducer in the width direction of the vehicle.

In an embodiment, the driving apparatus further includes a controller, the controller is electrically connected with the driver. The controller and the driver are located on a same side of the speed reducer.

In an embodiment, in the height direction of the vehicle, the bottom of the controller is higher than the speed reducer.

In an embodiment, in the height direction of the vehicle, the controller and the driver extend obliquely toward two sides relative to the speed reducer respectively, and the gearbox and the driver extend obliquely toward a same side relative to the speed reducer.

According to a second aspect of the present disclosure, a vehicle is provided, including: a driving apparatus according to any one of the above embodiments and an exhaust pipe. The bottom of a driver cooperates with a speed reducer to define an accommodating space. At least a portion of the exhaust pipe extends along a length direction of the vehicle, and a portion of the exhaust pipe extending along the length direction of the vehicle is received in the accommodating space.

In an embodiment, the vehicle further includes a subframe, and the driving apparatus and the exhaust pipe are respectively arranged on the subframe. The subframe includes a front cross beam, a rear cross beam, a first longitudinal beam and a second longitudinal beam. The front cross beam and the rear cross beam extend along the width direction of the vehicle respectively and are spaced apart in the length direction of the vehicle. The driving apparatus is located between the front cross beam and the rear cross beam and is connected to the front cross beam and the rear cross beam respectively. The first longitudinal beam and the second longitudinal beam extend along the length direction of the vehicle respectively and are spaced apart in the width direction of the vehicle. The first longitudinal beam and the second longitudinal beam are respectively connected to the front cross beam and the rear cross beam. Wherein, the portion of the speed reducer lower than the driver and the gearbox is located between the first longitudinal beam and the second longitudinal beam. In the height direction of the vehicle, the first longitudinal beam is located on a lower side of the driver, and the second longitudinal beam is located on a lower side of the gearbox.

In an embodiment, the vehicle further includes a lower swing arm mounting frame, and the lower swing arm mounting frame is disposed on the subframe. The lower swing arm mounting frame, the first longitudinal beam and the second longitudinal beam are arranged along the width direction of the vehicle.

In an embodiment, in the width direction of the vehicle, the speed reducer and the exhaust pipe are located on opposite sides of a center line of the vehicle.

According to the driving apparatus of the present disclosure, a single driver, a gearbox and a speed reducer are integrated together, so that the integration level of the driving apparatus is higher. By arranging at least a portion of the speed reducer between the driver and the gearbox, and arranging at least one of the driver and the gearbox higher than the bottom of the speed reducer in the height direction of the vehicle, the height difference between the driver or the gearbox and the speed reducer can be utilized to reserve an accommodating space for other structures of the vehicle. Therefore, some structures originally arranged apart from the drive driving apparatus in the width direction of the vehicle can be arranged at the bottom of the gearbox or the speed reducer to reduce the width of the vehicle, so as to better adapt to vehicles with a narrow track width. Meanwhile, the ground clearance of the vehicle can be increased, and the passability of the vehicle can be improved.

Other features and advantages of the present disclosure will become apparent from the following detailed description of exemplary embodiments of the present disclosure with reference to the accompanying drawings.

### BRIEF DESCRIPTION OF THE DRAWINGS

The accompanying drawings, which are incorporated in and constitute a portion of the specification, illustrate embodiments of the present disclosure and serve to explain the principles of the present disclosure together with the description.
FIG. 1 is a left side view of a driving apparatus according to an embodiment of the present disclosure;
FIG. 2 is a bottom view of a driving apparatus according to an embodiment of the present disclosure;
FIG. 3 is a perspective view of a partial structure of a vehicle from one viewing angle according to an embodiment of the present disclosure;
FIG. 4 is a perspective view of a partial structure of a vehicle from another viewing angle according to an embodiment of the present disclosure;
FIG. 5 is a cross-sectional view of a partial structure of a vehicle according to an embodiment of the present disclosure;
FIG. 6 is a bottom view of a partial structure of a vehicle according to an embodiment of the present disclosure;
FIG. 7 is a left side view of a partial structure of a vehicle according to an embodiment of the present disclosure;
FIG. 8 is a right side view of a partial structure of a vehicle according to an embodiment of the present disclosure.

Reference numerals:
Driving apparatus 100; Driver 10; First accommodating space 11; Gearbox 20; Second accommodating space 21; Speed reducer 30; Differential 40; Differential lock 41; Controller 50;
Subframe 200; Front cross beam 201; Rear cross beam 202; First longitudinal beam 203; Second longitudinal beam 204; Lower swing arm mounting frame 205; Center line A;
Exhaust pipe 300;
Main frame 400;
Vehicle 500.

### DETAILED DESCRIPTION

Various exemplary embodiments of the present disclosure will now be described in detail with reference to the accompanying drawings. It should be noted that unless otherwise specifically stated, the relative arrangement of components and steps, numerical expressions and numerical values set forth in these embodiments are not intended to limit the scope of the present application.

The following description of at least one exemplary embodiment is merely illustrative in nature and in no way constitutes any limitation on the present disclosure, its application or uses.

Techniques, methods and apparatus known to those of ordinary skill in the relevant art may not be discussed in detail, but where appropriate, such techniques, methods and apparatus should be considered as part of the specification.

In all examples shown and discussed herein, any specific values should be construed as merely exemplary, and not as limiting. Therefore, other examples of the exemplary embodiments may comprise different values.

It should be noted that like reference numerals and letters refer to similar items in the following figures, and therefore, once an item is defined in one figure, it need not be further discussed in subsequent figures.

A driving apparatus 100 according to an embodiment of the present disclosure will be described in detail first with reference to the accompanying drawings. The driving apparatus 100 is applicable to a vehicle, for example, a vehicle 500.

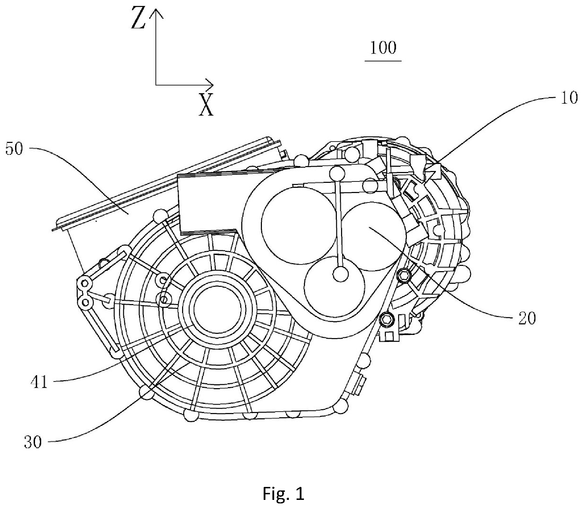

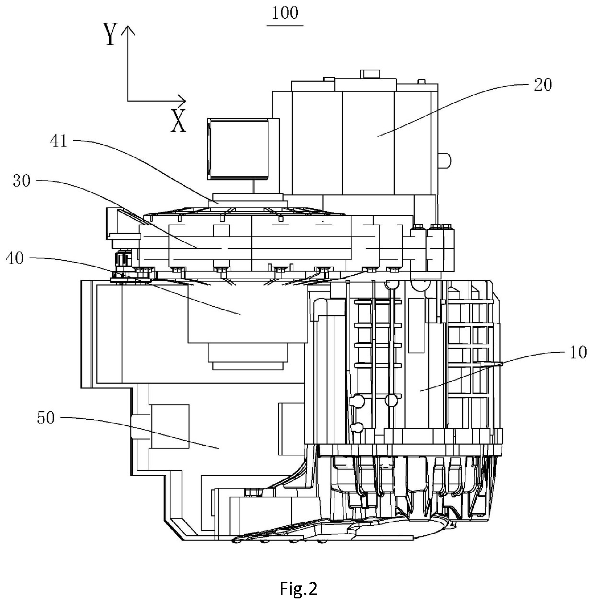

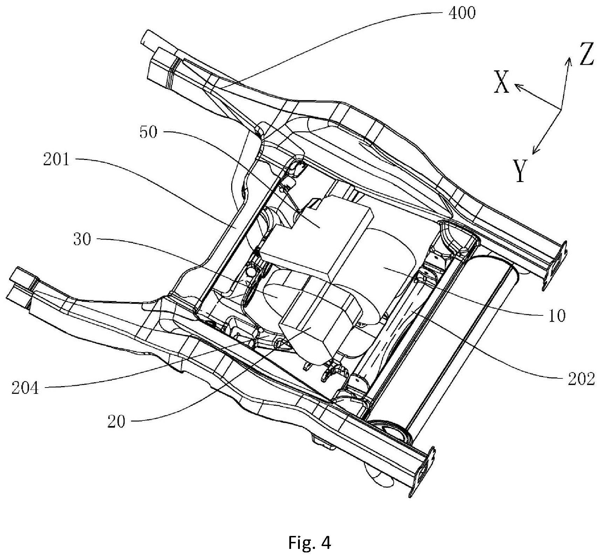

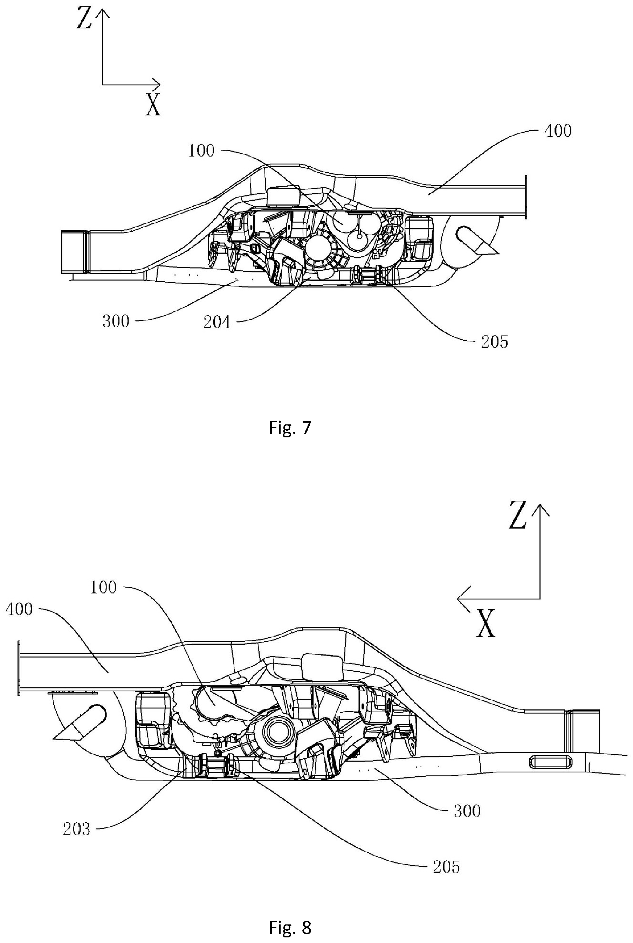

As shown in FIG. 1 to FIG. 8, the driving apparatus 100 according to the embodiment of the present disclosure comprises a driver 10, a gearbox 20, and a speed reducer 30.

Specifically, the gearbox 20 and the driver 10 are spaced apart in the width direction of the vehicle 500. At least a portion of the speed reducer 30 is located between the driver 10 and the gearbox 20. Wherein, at least one of the driver 10 and the gearbox 20 is higher than the bottom of the speed reducer 30 in the height direction of the vehicle 500.

In other words, the driving apparatus 100 according to the embodiment of the present disclosure is mainly composed of the driver 10, the gearbox 20 and the speed reducer 30.

Herein, the driver 10 can serve as a power source to provide power for driving the wheels to travel. Optionally, the driver 10 may be a drive motor, and an output shaft of the drive motor may extend along the width direction of the vehicle 500.

Optionally, the gearbox 20 may be drivingly connected to the driver 10. For example, an output end of the driver 10 may be connected to an input end of the gearbox 20 via a transmission shaft, so as to transmit the power of the driver 10 and adjust the rotational speed and torque output by the driver 10.

The gearbox 20 may comprise a plurality of transmission ratios, and during the traveling of the vehicle 500, the transmission ratio of the gearbox 20 can be switched to adapt to different working conditions of the vehicle 500. For example, in working conditions with a high torque demand such as climbing a slope, a large transmission ratio can be adopted for output.

Optionally, the gearbox 20 may be a two-speed gearbox, and the two-speed gearbox may comprise two transmission ratios, one large and one small.

For the convenience of description, the length direction of the vehicle 500 may be defined as the X-axis direction, the width direction of the vehicle 500 as the Y-axis direction, and the height direction of the vehicle 500 as the Z-axis direction.

Optionally, the speed reducer 30 may be drivingly connected to the gearbox 20. For example, an output end of the gearbox 20 may be connected to an input end of the speed reducer 30, so as to transmit the power output by the driver 10 to the speed reducer 30. The speed reducer 30 may be used for reducing the rotational speed and increasing the torque. The speed reducer 30 may be mainly composed of reduction gears.

The driver 10 and the gearbox 20 may be spaced apart in the Y-axis direction. Specifically, the driver 10 and the gearbox 20 may each comprise a housing, and the housing of the driver 10 and the housing of the gearbox 20 may be spaced apart in the Y-axis direction.

In the Y-axis direction, the speed reducer 30 may be partially or entirely located between the gearbox 20 and the driver 10. The speed reducer 30 may comprise a housing. In particular, the housing of the speed reducer 30 may be partially or entirely located between the housing of the gearbox 20 and the housing of the driver 10.

In the Z-axis direction, at least one of the driver 10 and the gearbox 20 may be higher than the bottom of the speed reducer 30, which may specifically include but not limited to the following cases:
Case 1: The driver 10 is higher than the bottom of the speed reducer 30;
Case 2: The gearbox 20 is higher than the bottom of the speed reducer 30;
Case 3: Both the driver 10 and the gearbox 20 are higher than the bottom of the speed reducer 30.

In other words, the speed reducer 30 may be partially or entirely lower than the driver 10, and/or the speed reducer 30 may be partially or entirely lower than the gearbox 20.

When the vehicle 500 is positioned on a flat ground, a distance between the bottom of the speed reducer 30 and the ground may be L1, a distance between the driver 10 and the ground may be L2, and a distance between the gearbox 20 and the ground may be L3, where L1 < L2 and/or L1 < L3, it is conducive to increasing the ground clearance of the driver 10 and/or the gearbox 20, thereby reserving an accommodating space for other structures of the vehicle 500 on the bottom side of the driver 10 and/or the gearbox 20.

In the conventional technology, in order to ensure the passability of the vehicle 500, no accommodating space is reserved on the bottom side of the driver 10 and the gearbox 20, and some structures of the vehicle 500 adjacent to the driving apparatus 100 need to be arranged on both sides of the driving apparatus 100 in the Y-axis direction, which increases the dimension of the vehicle 500 in the Y-axis direction. In this embodiment, these structures can be arranged on a bottom side of the driver 10 or the gearbox 20, so the driving apparatus 100 of this embodiment is also conducive to reducing the dimension of the vehicle 500 in its own width direction.

Thus, according to the driving apparatus 100 of the embodiment of the present disclosure, a single driver 10, a gearbox 20 and a speed reducer 30 are integrated together, so that the integration level of the driving apparatus 100 is higher. By arranging at least a portion of the speed reducer 30 between the driver 10 and the gearbox 20, and arranging at least one of the driver 10 and the gearbox 20 higher than the bottom of the speed reducer 30 in the height direction of the vehicle 500, the height difference between the driver 10 or the gearbox 20 and the speed reducer 30 can be utilized to reserve an accommodating space for other structures of the vehicle 500. Therefore, some structures originally arranged apart from the driving apparatus 100 in the width direction of the vehicle 500 can be arranged at the bottom of the gearbox 20 or the speed reducer 30 to reduce the width of the vehicle 500, so as to better adapt to vehicles with a narrow track width. Meanwhile, the ground clearance of the vehicle 500 can be increased, and the passability of the vehicle 500 can be improved.

Optionally, in the height direction of the vehicle, the bottom of the driver 10 and the bottom of the gearbox 20 are respectively higher than the bottom of the speed reducer 30.

In other words, the bottom of the speed reducer 30 is closer to the ground than the bottom of the driver 10 and the bottom of the gearbox 20. For example, in the Z-axis direction, the distance between the bottom surface of the housing of the speed reducer 30 and the ground may be less than the distance between the bottom surface of the housing of the driver 10 and the ground, and the distance between the bottom surface of the housing of the speed reducer 30 and the ground may be less than the distance between the bottom surface of the housing of the gearbox 20 and the ground.

The bottom of the housing of the driver 10 and the bottom of the housing of the gearbox 20 are respectively provided with a large ground clearance, which is possible to allow other structures of the vehicle 500 to be arranged on the bottom side of the driver 10 and/or the gearbox 20, and to ensure that bottoms of these structures are not lower than the bottom of the speed reducer 30, thereby improving the passability of the vehicle 500.

In addition, some other structures of the vehicle 500 originally arranged on both sides of the driver 10 and the gearbox 20 along the Y-axis direction can be arranged at the bottom of the driver 10 and/or the gearbox 20 respectively, further reducing the dimension of the vehicle 500 in its own width direction.

Optionally, in the width direction of the vehicle 500, the speed reducer 30 is staggered from the driver 10 and the gearbox 20 respectively.

Specifically, the speed reducer 30 may be partially or entirely staggered from the driver 10 and the gearbox 20 respectively in the Y-axis direction. The Y-axis direction is the left-right direction of the vehicle 500. Therefore, the left and right side surfaces of the speed reducer 30 can cooperate with one side surface of the driver 10 and one side surface of the gearbox 20 in the X-axis direction to form a folded angle space, which can be used as an accommodating space for arranging other structures of the vehicle 500. Thus, some structures originally arranged on the left and right sides of the overall driving apparatus 100 can be arranged in the above-mentioned folded angle space, making the structure of the vehicle 500 more compact and further reducing the dimension of the vehicle 500 in its own width direction.

Optionally, in the length direction of the vehicle 500, i.e., the front-rear direction of the vehicle 500, at least a portion of the speed reducer 30 may be located on the front side of the driver 10 and the gearbox 20 respectively. For example, the front side surface of the speed reducer 30 may be located in front of the front side surface of the driver 10. The rear side surface of the speed reducer 30 may be located in front of the rear side surface of the driver 10. The front side surface of the speed reducer 30 may be located in front of the front side surface of the gearbox 20.

Optionally, the driving apparatus 100 further comprises a differential 40. The differential 40 is connected to an output end of the speed reducer 30, and at least a portion of the differential 40 is disposed on a side of the speed reducer 30 facing the driver 10. In the height direction of the vehicle 500, the bottom of the differential 40 is higher than the bottom of the speed reducer 30.

Specifically, the differential 40, the speed reducer 30, the gearbox 20 and the driver 10 may be integrated together to improve the integration level of the driving apparatus 100. The differential 40 may be drivingly connected to the gearbox 20. An input end of the differential 40 may be connected to an output end of the speed reducer 30 to receive the power output by the speed reducer 30. An output end of the differential 40 may be drivingly connected to the left and right wheels of the vehicle 500 via a drive axle to transmit power to the wheels. The differential 40 can drive the two wheels to rotate at different rotational speeds.

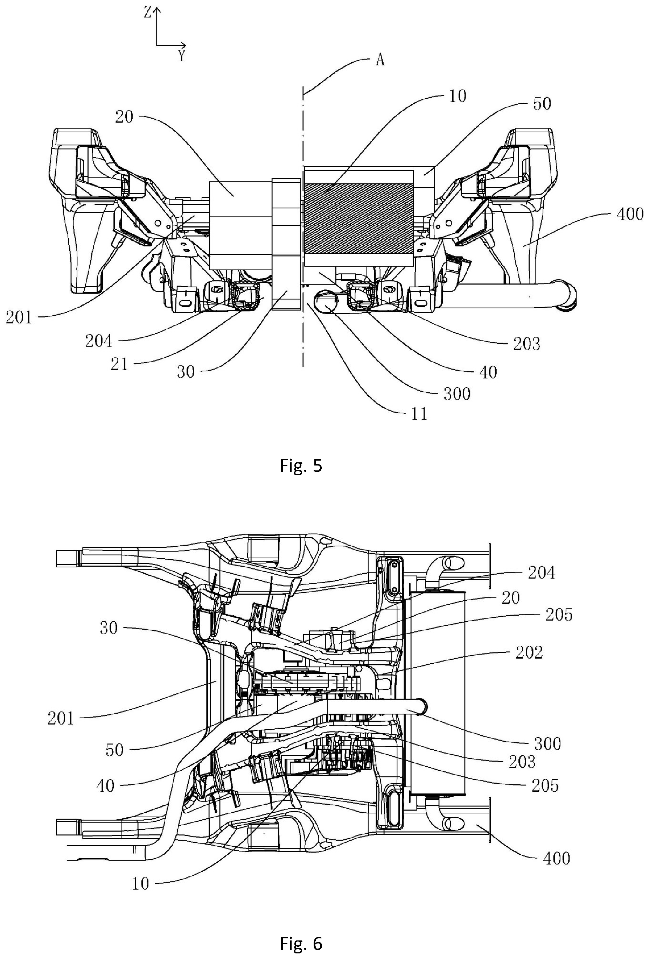

In the Y-axis direction, a part or the whole of the differential 40 and the driver 10 may be located on a same side of the speed reducer 30. For example, as shown in FIG. 5, the driver 10 may be located on the right side of the speed reducer 30, the differential 40 may be partially or entirely located on the right side of the speed reducer 30. The gearbox 20 may be located on the left side of the speed reducer 30.

Since the driver 10 is generally large in size, arranging at least a portion of the differential 40 on a side of the speed reducer 30 facing the driver 10 is conducive to reducing the dimension of the overall driving apparatus 100 in the Y-axis direction.

For example, in the Y-axis direction, an end surface of the driver 10 farthest from the speed reducer 30 is located on a side of the differential 40 far from the speed reducer 30. In other words, the dimension of the portion of the differential 40 located on a side of the speed reducer 30 facing the driver 10 in the Y-axis direction is smaller than the dimension of the driver 10 in the Y-axis direction. Since the Y-direction size of the driver 10 is relatively large, arranging at least a portion of the differential 40 on a side of the speed reducer 30 facing the driver 10 is conducive to reducing the dimension of the overall driving apparatus 100 in the Y-axis direction, reserving a larger accommodating space for other structures of the vehicle 500, and better adapting to the layout of vehicles with a narrow track width.

The bottom of the differential 40 is higher than the bottom of the speed reducer 30. In other words, the distance between the differential 40 and the ground may be larger than the distance between the speed reducer 30 and the ground. Therefore, it is possible to reserve an accommodating space for other structures of the vehicle 500 on the bottom side of the differential 40, which can increase the overall ground clearance of the vehicle 500 and improve the passability of the vehicle 500, and at the same time, some other structures of the vehicle 500 originally arranged on both sides of the differential 40 along the Y-axis direction can be arranged on the bottom side of the differential 40 to reduce the dimension of the vehicle 500 in its own width direction.

Specifically, as shown in FIG. 5, in the Z-axis direction, the bottom surface of the housing of the differential 40 may be higher than the bottom surface of the housing of the speed reducer 30, so that the differential 40 has a relatively large ground clearance.

Optionally, the speed reducer 30 and the differential 40 may be integrated together. Specifically, the reduction gears in the speed reducer 30 and a plurality of gears in the differential 40 may be enclosed in a single housing. The bottom surface of the housing corresponding to the differential 40 may be higher than the bottom surface of the housing corresponding to the speed reducer 30.

Optionally, the differential 40 is configured to overlap with the speed reducer 30 in the width direction of the vehicle 500.

Specifically, the speed reducer 30 and the differential 40 may each be columnar, and an axis of the columnar speed reducer 30 and an axis of the columnar differential 40 may respectively extend along the Y-axis direction. The diameter of the speed reducer 30 is relatively large, and the diameter of the differential 40 is relatively small. In the Y-axis direction, the differential 40 may partially or entirely overlap with the speed reducer 30. For example, in the Y-axis direction, the differential 40 may be divided into at least two portions, a first portion may be located on a side of the speed reducer 30 facing the driver 10, and a second portion may completely overlap with the speed reducer 30.

In this embodiment, by arranging the differential 40 to overlap with the speed reducer 30 in the Y-axis direction, it is conducive to reducing the overall dimension of the assembly formed by the differential 40 and the speed reducer 30 in the Y-axis direction, reducing the layout space required by the driving apparatus 100, facilitating the layout of other structures of the vehicle 500, and improving the compactness of the vehicle 500.

Optionally, the driving apparatus 100 further comprises a differential lock 41, the differential lock 41 is disposed in the differential 40 for locking the differential 40.

Specifically, the differential lock 41 may be integrated into the differential 40. When one of the two wheels connected to the differential 40 spins idly, the differential lock 41 can lock the differential 40, so that the drive axles corresponding to the two wheels become rigidly connected, thereby transmitting the torque output by the driver 10 to the two wheels, enabling the vehicle 500 to continue traveling and preventing the vehicle 500 from losing power due to the idling of a certain wheel.

Optionally, the driving apparatus 100 further comprises a controller 50, the controller 50 is electrically connected to the driver 10. The controller 50 and the driver 10 are located on a same side of the speed reducer 30.

The driver 10 can be controlled by the controller 50 to adjust the power output by the driver 10. Arranging the controller 50 on a side of the speed reducer 30 facing the driver 10 enables the overall structure of the driving apparatus 100 to be more compact. In addition, the controller 50, the driver 10, the speed reducer 30 and differential are integrated together, which is conducive to improving the integration level of the driving apparatus 100.

Optionally, in the height direction of the vehicle 500, the bottom of the controller 50 is higher than the speed reducer 30.

In the Z-axis direction, the ground clearance of the bottom of the controller 50 may be larger than the ground clearance of the bottom of the speed reducer 30, so as to increase the ground clearance of the controller 50 and facilitate the arrangement of other structures of the vehicle 500. Specifically, the main body of the controller 50 may be enclosed in a corresponding housing. The top surface of the housing of the controller 50 may be higher than the top surface of the housing of the speed reducer 30.

Additionally, the controller 50 is internally provided with precise electronic control structures. Increasing the ground clearance of the controller 50 is conducive to protecting the controller 50 and avoiding damage to the controller 50 caused by foreign objects on the road surface colliding with the controller 50.

Optionally, the controller 50 may be arranged on the top side of the differential 40, and since the differential 40 is higher than the speed reducer 30 in the Z-axis direction, the controller 50 is also higher than the speed reducer 30.

Optionally, in the height direction of the vehicle 500, the controller 50 and the driver 10 extend obliquely toward two sides relative to the speed reducer 30 respectively, and the gearbox 20 and the driver 10 extend obliquely toward a same side relative to the speed reducer 30.

Specifically, since the bottom of the driver 10, the bottom of the gearbox 20 and the bottom of the controller 50 are respectively higher than the bottom of the speed reducer 30, the driver 10, the gearbox 20 and the controller 50 respectively extend obliquely upward relative to the speed reducer 30. Wherein, the driver 10 and the gearbox 20 may extend obliquely upward toward the positive direction of the X-axis direction, and the controller 50 may extend obliquely upward toward the reverse direction of the X-axis direction, which can make the structure of the overall driving apparatus 100 more compact.

For example, the positive direction of the X-axis direction may be defined as facing the rear of the vehicle 500, and the reverse direction of the X-axis direction may be defined as facing the front of the vehicle 500. The driver 10 and the gearbox 20 may extend toward the rear upper part of the vehicle 500, and the controller 50 may extend toward the front upper part of the vehicle 500. That is, in the height direction of the vehicle 500, the driver 10, the gearbox 20 and the controller 50 are all higher than the speed reducer 30, in the front-rear direction of the vehicle 500, the driver 10 and the gearbox 20 are closer to the rear end of the vehicle 500 relative to the speed reducer 30, and the controller 50 is closer to the front end of the vehicle 500 relative to the speed reducer 30.

The controller 50 and the driver 10 are not only located on a same side of the speed reducer 30 but also higher than the speed reducer 30. The driver 10 and the gearbox 20 are not only located on opposite sides of the speed reducer 30 in the Y-axis direction but also higher than the speed reducer 30.

Optionally, in the X-axis direction, the controller 50 may be located on the front side of the driver 10. The controller 50 may be located on the front upper side of the speed reducer 30. The driver 10 may be located on the rear upper side of the speed reducer 30. The gearbox 20 may be located on the rear upper side of the speed reducer 30. In the Y-axis direction, the driver 10 and the controller 50 may be located on the right side of the speed reducer 30, and the gearbox 20 may be located on the left side of the speed reducer 30.

Optionally, in the height direction of the vehicle 500, the driver 10 and the gearbox 20 may be respectively higher than the differential 40. Specifically, the bottom surface of the housing of the driver 10 and the bottom surface of the housing of the gearbox 20 may be respectively higher than the bottom surface of the housing of the differential 40, so that the ground clearance of the driver 10 and the gearbox 20 can be larger, thereby reserving a larger space on the bottom side of the driver 10 and the gearbox 20 to facilitate the arrangement of other structures of the vehicle 500.

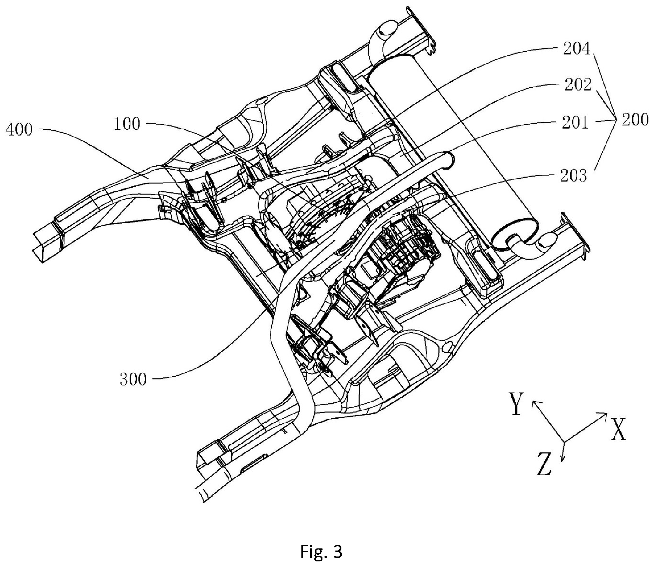

The embodiment of the present disclosure also provides a vehicle 500. As shown in FIG. 3 to FIG. 8, the vehicle 500 comprises a driving apparatus 100 and an exhaust pipe 300.

Wherein, the driving apparatus 100 is the driving apparatus 100 according to the above embodiment. The bottom of the driver 10 cooperates with the speed reducer 30 to define an accommodating space. At least a portion of the exhaust pipe 300 extends along a length direction of the vehicle, and a portion of the exhaust pipe 300 extending along the length direction of the vehicle is received in the accommodating space.

Specifically, the arrangement of the driving apparatus 100 and the exhaust pipe 300 of this embodiment is applicable to rear-wheel drive and four-wheel drive vehicles. In addition, such rear-wheel drive arrangement is applicable to new energy vehicles such as off-road vehicles, pickup trucks or large SUVs.

A side of the speed reducer 30 facing the driver 10 can cooperate with the bottom of the driver 10 to define a first accommodating space 11. A side of the speed reducer 30 facing the gearbox 20 can cooperate with the bottom of the gearbox 20 to define a second accommodating space 21. Wherein, the first accommodating space 11 can be the above-mentioned accommodating space.

A portion of the exhaust pipe 300 may extend along the X-axis direction, and a portion of the exhaust pipe 300 extending along the X-axis direction may be accommodated in the first accommodating space 11. In other words, a portion of the exhaust pipe 300 extending along the X-axis direction may be embedded under the driver 10 and located on a side of the speed reducer 30 facing the driver 10, and the bottom of the exhaust pipe 300 is not lower than the bottom of the speed reducer 30. Thus, the exhaust pipe 300 can be accommodated at the bottom of the driver 10 while ensuring the passability of the vehicle 500.

Compared with the conventional technology in which the exhaust pipe 300 is disposed on a side of the overall driving apparatus 100 in the Y-axis direction, in this embodiment, since the driver 10 is higher than the bottom of the speed reducer 30, an accommodating space is reserved for the exhaust pipe 300 on the bottom side of the driver 100, so that the exhaust pipe 300 can be arranged under the driver 10 and adjacent to the speed reducer 30, which is conducive to reducing the dimension of the vehicle 500 in its own width direction while ensuring the passability of the vehicle 500.

Since the driving apparatus 100 according to the embodiment of the present disclosure has the above technical effects, the vehicle 500 according to the embodiment of the present disclosure also has corresponding technical effects, that is, the integration level of the vehicle 500 is higher, the height difference between the driver 10 or the gearbox 20 and the speed reducer 30 can be utilized to reserve an accommodating space for the exhaust pipe 300, which is conducive to reducing the Y-axis dimension of the driving apparatus 100, realizing the concealed arrangement of the exhaust pipe 300, improving the overall aesthetics of the vehicle, and better adapting to vehicles with a narrow track width. Meanwhile, the ground clearance of the exhaust pipe 300 can be increased, thereby improving the passability of the vehicle 500.

Optionally, the exhaust pipe 300 may be located on the bottom of a first portion of the differential 40. The first portion of the differential 40 may be higher than the speed reducer 30 and lower than the driver 10 in the Z-axis direction. Arranging the exhaust pipe 300 at the bottom of the first portion of the differential 40 enables the exhaust pipe 300 to be closer to the speed reducer 30, making the layout of the exhaust pipe 300 and the subframe 200 more compact.

Optionally, the vehicle 500 further comprises a subframe 200, and the driving apparatus 100 and the exhaust pipe 300 are respectively arranged on the subframe 200. The subframe 200 comprises a front cross beam 201, a rear cross beam 202, a first longitudinal beam 203, and a second longitudinal beam 204.

The front cross beam 201 and the rear cross beam 202 extend along the width direction of the vehicle 500 respectively and are spaced apart in the length direction of the vehicle 500. The driving apparatus 100 is located between the front cross beam 201 and the rear cross beam 202 and is connected to the front cross beam 201 and the rear cross beam 202 respectively. The first longitudinal beam 203 and the second longitudinal beam 204 extend along the length direction of the vehicle 500 respectively and are spaced apart in the width direction of the vehicle 500. The first longitudinal beam 203 and the second longitudinal beam 204 are connected to the front cross beam 201 and the rear cross beam 202 respectively. A portion of the speed reducer 30 lower than the driver 10 and the gearbox 20 is located between the first longitudinal beam 203 and the second longitudinal beam 204. In the height direction of the vehicle 500, the first longitudinal beam 203 is located on a lower side of the driver 10, and the second longitudinal beam 204 is located on a lower side of the gearbox 20.

The subframe 200 may be a framework of the front and rear axles of the vehicle, used for isolating vibration and noise and reducing the entry of vibration and noise into the carriage.

Optionally, the vehicle 500 may further comprise a main frame 400. The main frame 400 may be a main beam structure of the vehicle 500. The subframe 200 may be mounted on the main frame 400. For example, the main frame 400 may comprise two longitudinal beams, each of which may extend along the X-axis direction, and the subframe 200 may be connected to the two longitudinal beams of the main frame 400.

The driving apparatus 100 may be fixedly mounted on the subframe 200 via a mount. For example, in the X-axis direction, the front side and the rear side of the driving apparatus 100 may be connected to the subframe 200 via mounting structures, respectively.

The exhaust pipe 300 may be arranged on the subframe 200, and the exhaust pipe 300 and the subframe 200 may be connected via a lifting lug.

The subframe 200 may be mainly composed of a front cross beam 201, a rear cross beam 202, a first longitudinal beam 203 and a second longitudinal beam 204. Wherein, the front cross beam 201 and the rear cross beam 202 may extend along the Y-axis direction. The front cross beam 201 and the rear cross beam 202 may be spaced apart in the X-axis direction. The front cross beam 201 may be located on the front side of the rear cross beam 202. Both ends of the front cross beam 201 may be respectively connected to the two longitudinal beams of the main frame 400. Both ends of the rear cross beam 202 may also be respectively connected to the two longitudinal beams of the main frame 400.

The driving apparatus 100 may be mounted between the front cross beam 201 and the rear cross beam 202. Specifically, the driving apparatus 100 and the front cross beam 201, as well as the driving apparatus 100 and the rear cross beam 202 may be connected via mounting structures.

The first longitudinal beam 203 and the second longitudinal beam 204 may respectively extend along the X-axis direction, and the first longitudinal beam 203 and the second longitudinal beam 204 may be spaced apart in the Y-axis direction. The front end of the first longitudinal beam 203 and the front end of the second longitudinal beam 204 may be connected to the front cross beam 201, and the rear end of the first longitudinal beam 203 and the rear end of the second longitudinal beam 204 may be connected to the rear cross beam 202.

In the Y-axis direction, the portion of the speed reducer 30 lower than the driver 10 and the gearbox 20 may be located between the first longitudinal beam 203 and the second longitudinal beam 204.

A portion of the first longitudinal beam 203 may be accommodated in the first accommodating space 11. A portion of the second longitudinal beam 204 may be accommodated in the second accommodating space 21. Specifically, the first longitudinal beam 203 may be located on the right side of the speed reducer 30 and on the bottom side of the driver 10. The second longitudinal beam 204 may be located on the left side of the speed reducer 30 and on the bottom side of the gearbox 20.

In this embodiment, arranging the first longitudinal beam 203 of the subframe 200 on the bottom side of the driver 10 and the second longitudinal beam 204 on the bottom side of the gearbox 20 is not only conducive to reducing the dimension of the vehicle 500 in its own width direction compared with the conventional technology in which the first longitudinal beam 203 and the second longitudinal beam 204 are arranged on the left and right sides of the overall driving apparatus 100, but also can improve the ground clearance of the subframe 200, thereby improving the passability of the vehicle 500.

In some optional embodiments, in the Y-axis direction, the first longitudinal beam 203 is located on a side of the exhaust pipe 300 far from the speed reducer 30.

Optionally, the first longitudinal beam 203 and the second longitudinal beam 204 may each be a curved strip. In the Z-axis direction, the first longitudinal beam 203 and the second longitudinal beam 204 may respectively bend toward the ground. The two longitudinal beams of the main frame 400 may respectively bend toward a direction away from the ground.

Optionally, the vehicle 500 further comprises a lower swing arm mounting frame 205, and the lower swing arm mounting frame 205 is disposed on the subframe 200. The lower swing arm mounting frame 205, the first longitudinal beam 203 and the second longitudinal beam 204 are arranged along the width direction of the vehicle 500.

Specifically, the lower swing arm mounting frame 205 may be connected to the subframe 200, and the lower swing arm mounting frame 205 may be used for connecting a suspension system. One end of the suspension system may be connected to the subframe 200 via the lower swing arm mounting frame 205, and the other end of the suspension system may be connected to the axle to play a role of buffering and shock absorption.

The number of the lower swing arm mounting frames 205 may be two. The two lower swing arm mounting frames 205, the first longitudinal beam 203 and the second longitudinal beam 204 may be arranged along the Y-axis direction, which not only takes into account the structural strength requirements of the subframe 200, but also prevents the first longitudinal beam 203 and the second longitudinal beam 204 in the subframe 200 from extending downward to avoid the lower swing arm mounting frames 205, which is conducive to improving the ground clearance of the subframe 200 and the passability of the vehicle 500.

Optionally, in the width direction of the vehicle 500, the speed reducer 30 and the exhaust pipe 300 are located on opposite sides of a center line A of the vehicle 500 respectively.

As shown in FIG. 5, the center line A of the vehicle 500 may pass through the center of the vehicle 500 in the Y-axis direction. In the Y-axis direction, the speed reducer 30 may be located on one side of the center line A, and the exhaust pipe 300 may be located on the other side of the center line A. That is to say, the speed reducer 30 and the exhaust pipe 300 may be respectively arranged eccentrically relative to the vehicle 500 in the Y-axis direction.

In this embodiment, arranging the speed reducer 30 and the exhaust pipe 300 on opposite sides of the center line A of the vehicle 500 is not only conducive to improving the balance of the vehicle 500 but also can make the structure of the vehicle 500 more compact, facilitating the arrangement of the first longitudinal beam 203 and the second longitudinal beam 204 of the subframe 200. This enables the first longitudinal beam 203 and the second longitudinal beam 204 to be arranged substantially symmetrically on opposite sides of the center line A, thereby further improving the balance of the vehicle 500.

Although some specific embodiments of the present disclosure have been described in detail with examples, however, those skilled in the art should understand that the foregoing examples are for illustration purposes only and are not intended to limit the scope of the present disclosure. Those skilled in the art should understand that modifications may be made to the foregoing embodiments without departing from the scope and spirit of the present disclosure. The scope of the present disclosure is defined by the appended claims.

## Claims

1. A driving apparatus (100), comprising:
a driver (10);
a gearbox (20), the gearbox (20) and the driver being spaced apart in a width direction of a vehicle; and
a reducer (30), at least a portion of the speed reducer being located between the driver and the gearbox;
wherein at least one of the driver and the gearbox is higher than a bottom of the speed reducer in a height direction of the vehicle.

2. The driving apparatus (100) according to claim 1, a bottom of the driver and a bottom of the gearbox being respectively higher than the bottom of the speed reducer in the height direction of the vehicle.

3. The driving apparatus (100) according to claim 1, the speed reducer being staggered from the driver and the gearbox respectively in the width direction of the vehicle.

4. The driving apparatus (100) according to claim 1, further comprising:
a differential (40), the differential being connected to an output end of the speed reducer, at least a portion of the differential being disposed on a side of the speed reducer facing the driver, wherein a bottom of the differential being higher than a bottom of the speed reducer in the height direction of the vehicle.

5. The driving apparatus (100) according to claim 4, the differential being configured to overlap with the speed reducer in the width direction of the vehicle.

6. The driving apparatus (100) according to claim 1, further comprising:
a controller (50), the controller and the driver being located on a same side of the speed reducer, and the controller being electrically connected to the driver.

7. The driving apparatus (100) according to claim 6, a bottom of the controller being higher than the speed reducer in the height direction of the vehicle.

8. The driving apparatus (100) according to claim 6, in the height direction of the vehicle, the controller and the driver extending obliquely toward two sides relative to the speed reducer respectively, and the gearbox and the driver extending obliquely toward a same side relative to the speed reducer.

9. A vehicle (500), comprising:
a driving apparatus (100), the driving apparatus being a driving apparatus according to any one of claims 1 to 8, a bottom of the driver cooperating with the speed reducer to define an accommodating space (11); and
an exhaust pipe (300), at least a portion of the exhaust pipe extending along the length direction of the vehicle, the portion of the exhaust pipe extending along a length direction of the vehicle being received in the receiving space.

10. The vehicle (500) according to claim 9, further comprising a subframe (200), the exhaust pipe being arranged on the subframe, the subframe comprising:
a front cross beam (201) and a rear cross beam, the front cross beam and the rear cross beam extending along the width direction of the vehicle respectively and being spaced apart in the length direction of the vehicle, the driving apparatus being located between the front cross beam and the rear cross beam and being connected to the front cross beam and the rear cross beam respectively; and
a first longitudinal beam (203) and a second longitudinal beam (204), the first longitudinal beam and the second longitudinal beam extending along the length direction of the vehicle respectively and being spaced apart in the width direction of the vehicle, the first longitudinal beam and the second longitudinal beam being connected to the front cross beam and the rear cross beam respectively;
wherein a portion of the speed reducer lower than the driver and the gearbox being located between the first longitudinal beam and the second longitudinal beam,
in the height direction of the vehicle, the first longitudinal beam being located on a lower side of the driver, and the second longitudinal beam being located on a lower side of the gearbox.

11. The vehicle (500) according to claim 10, further comprising:
a lower swing arm mounting frame (205), the lower swing arm mounting frame being disposed on the subframe, the lower swing arm mounting frame, the first longitudinal beam and the second longitudinal beam being arranged along the width direction of the vehicle.

12. The vehicle (500) according to claim 9, in the width direction of the vehicle, the speed reducer and the exhaust pipe being located on opposite sides of a center line of the vehicle respectively.
